# EUROPÄISCHE PATENTSCHRIFT

(11) **EP 2 667 104 B1**
(45) Veröffentlichungstag und Bekanntmachung des Hinweises auf die Patenterteilung: **22.08.2018**
(21) Anmeldenummer: 13000618.2
(22) Anmeldetag: 07.02.2013
(51) Int. Cl.: F24D 17/00, C02F 1/00

(54) **Anlage sowie Verfahren zur Erwärmung von Trinkwasser**
System and method for warming drinking water
Installation et procédé de chauffage d'eau potable

(30) Priorität: 24.05.2012 DE 102012208774
(43) Veröffentlichungstag der Anmeldung: 27.11.2013
(73) Patentinhaber: Glen Dimplex Deutschland GmbH, 95326 Kulmbach (DE)
(72) Erfinder: Rammensee, Jens, Hof 95030 (DE); Timm, Edgar, Kulmbach 95326 (DE)
(74) Vertreter: FDST Patentanwälte

(56) Entgegenhaltungen:
- EP-A1- 1 626 034
- AT-B- 394 182

## Beschreibung

Die Erfindung betrifft eine Anlage sowie ein Verfahren zur Erwärmung von Trinkwasser mit einem Speicher für das Trinkwasser mit einem vorgegebenen Speichervolumen und mit einer ersten Heizeinrichtung zum Aufheizen des Trinkwassers. Eine derartige Anlage ist in der Patentschrift AT394182B gezeigt. Bei derartigen Anlagen besteht die Gefahr eines Befalls mit Legionellen. Diese Bakterien kommen in der natürlichen Umwelt meist in so geringen Mengen vor, dass sie in diesem Fall kein Gesundheitsrisiko für den Menschen darstellen. In Wasser jedoch können sich Legionellen bei Temperaturen von 30 bis 40°C so stark vermehren, dass hierdurch eine Infektion insbesondere durch Inhalation von kleinen Tröpfchen (Aerosol), wie z.B. beim Duschen, erfolgen kann. Verstärkt wird diese Problematik dadurch, dass Legionellen die Eigenschaft besitzen, sich intrazellulär stark zu vermehren. Im Falle einer Infektion treten dann häufig Symptome ähnlich einer Lungenentzündung auf.

Speziell für Großanlagen, beispielsweise für Wohngebäude, Hotels, Sport- und Industrieanlagen, muss das Wasser daher am Warmwasseraustritt des Trinkwassererwärmers stets auf einer Temperatur von 60°C oder darüber gehalten werden, da eine starke Vermehrung von Legionellen hierdurch unterbunden wird. Unter Großanlagen werden hier Anlagen mit einem Speichervolumen für das Trinkwasser > 400 I verstanden. Durch diese hohen Temperatur ist ein hoher Heizenergieeinsatz erforderlich.

Ausgehend hiervon liegt der Erfindung die Aufgabe zu Grunde, eine Anlage zur Erwärmung von Trinkwasser anzugeben, die den Anforderungen an den Legionellenschutz genügt und energieeffizient arbeitet.

Die Aufgabe wird durch eine Anlage mit den Merkmalen des Anspruchs 1 sowie durch ein Verfahren mit den Merkmalen des Anspruchs 14 gelöst. Bevorzugte Weiterbildungen sind in den Unteransprüchen enthalten. Die im Hinblick auf die Anlage aufgeführten Vorteile und Weiterbildungen sind sinngemäß und auf das Verfahren zu übertragen.

Die Anlage dient zur Erwärmung von Trinkwasser und umfasst hierfür einen Speicher für das Trinkwasser mit einem vorgegebenen Speichervolumen sowie eine erste Heizeinrichtung zum Erwärmen des Trinkwassers im Speicher auf eine erste Mindestsolltemperatur insbesondere von 50°C oder bis 55°C. Zudem ist eine Regeleinheit vorgesehen, die die Anlage, insbesondere das Erwärmen des Trinkwassers durch eine entsprechende Ansteuerung der Heizeinrichtung steuert. Weiter überprüft die Regeleinheit, ob eine Soll-Entnahmemenge an Trinkwasser aus dem Speicher innerhalb eines vorgegebenen Zeitraums, vorzugsweise innerhalb eines Zeitraums von 3 Tagen, entnommen wurde, und entscheidet in Abhängigkeit einer ermittelten Entnahmemenge an Trinkwasser, ob eine Legionellenschutzmaßnahme notwendig ist.

Ist die ermittelte Entnahmemenge geringer als die Soll-Entnahmemenge, wird eine Legionellenschutzmaßnahme ergriffen, um einer Gesundheitsgefährdung vorzubeugen. Die Soll-Entnahmemenge entspricht dabei insbesondere dem Speichervolumen. Dieses sollte daher innerhalb des vorgegebenen Zeitraums einmal vollständig ausgetauscht, also durch Trinkwasser ersetzt werden.

Dieser Lösung liegt dabei die Überlegung zugrunde, dass ein ausreichender Durchsatz an Trinkwasser durch den Speicher auch bei einer geringen Wassertemperatur von z.B. 50°C einer gesundheitsschädlichen Legionellenvermehrung vorbeugt. Dementsprechend wird das Trinkwasser im Speicher auf der relativ niedrigen, ersten Mindestsolltemperatur gehalten, solange der Durchsatz an Trinkwasser durch den Speicher ausreichend hoch ist, was zu einem geringen Energiebedarf führt. Ist der Durchsatz jedoch zu gering, wird eine geeignete Legionellenschutzmaßnahme ergriffen.

Die Regeleinheit ist vorzugsweise derart eingerichtet, dass als Legionellenschutzmaßnahme das Trinkwasser im Speicher auf eine zweite Mindestsolltemperatur erwärmt wird, die über der ersten Mindestsolltemperatur liegt und zum Beispiel mindestens 60°C beträgt. Zur Erwärmung des Trinkwassers auf die zweite, höhere Mindestsolltemperatur ist zweckdienlicherweise eine zweite zusätzliche Heizeinrichtung angeordnet, insbesondere eine elektrische Flanschheizung oder ein Heizkessel. Die Regeleinheit hält die Temperatur des Trinkwassers im Speicher bevorzugt anschließend so lange auf der zweiten Mindestsolltemperatur, bis die Soll-Entnahmemenge an Trinkwasser aus dem Speicher innerhalb des vorgegebenen Zeitraums entnommen wurde.

Bei der ersten Heizeinrichtung handelt es sich vorteilhafterweise um eine Wärmepumpe, insbesondere eine Niedertemperatur-Wärmepumpe, die lediglich für die Erwärmung des Trinkwassers auf die erste, untere Mindestsolltemperatur ausgelegt ist. Mit der Niedertemperatur-Wärmepumpe ist daher lediglich eine Maximaltemperatur für einen Wasservorlauf (mit dem der Speicher gespeist wird) erzeugbar, die unter der zweiten Mindestsolltemperatur liegt. Dieser Ausgestaltung liegt die Idee zugrunde, dass eine geforderte Wassertemperatur von größer gleich 60°C nur mit einer sogenannten Hochtemperatur-Wärmepumpe erreicht werden kann, die Wasservorlauftemperaturen von über 65°C ermöglicht. Von Nachteil ist, dass sich die Jahresarbeitszahl der Wärmepumpe, also das Verhältnis von eingesetzter elektrischer Energie zu erzeugter Wärme, mit zunehmender Vorlauftemperatur bei gleicher Wärmequellentemperatur reduziert. Damit ist ein höherer elektrischer Energieverbrauch verbunden. Durch das hier vorgestellte Konzept ist daher die energieeffiziente Verwendung einer Niedertemperatur-Wärmepumpe bei gleichzeitig hohem Legionellenschutz erzielt.

Zur Ermittlung der Entnahmemenge an Trinkwasser pro Zeiteinheit wird bevorzugt ein Volumen- oder Massenstromzähler eingesetzt, der zweckmäßigerweise wahlweise in einer Frischwasserzuleitung zum Speicher oder in einer Warmwasserableitung vom Speicher angeordnet ist. Desweiteren ist vorzugsweise ein Temperaturfühler zur Messung der Temperatur des erwärmten Trinkwassers insbesondere am Warmwassersausgang oder Austritt des Speichers vorgesehen, wobei der Volumen- oder Massenstromzähler und der Temperaturfühler gemäß einer vorteilhaften Ausgestaltung in einer gemeinsamen Sensoreinheit zusammengefasst sind.

Die Messdaten von Volumen- oder Massenstromzähler und Temperaturfühler werden zweckdienlicherweise an die Regeleinheit übermittelt und dienen somit als Grundlage für die Regelung des Betriebes der Anlage zur Erwärmung des Trinkwassers. Dabei ermittelt die Regeleinheit mit Hilfe des Volumen- oder Massenstromzählers die Entnahmemenge an Trinkwasser pro Zeiteinheit und prüft, ob innerhalb des vorgegebenen Zeitraums die Soll-Entnahmemenge an Trinkwasser entnommen wurde.

Ist dies nicht der Fall, so veranlasst die Regeleinheit automatisch eine Erwärmung des Trinkwassers im Speicher auf die zweite, höhere Mindestsolltemperatur. Dazu wird die Zusatzheizung zugeschaltet und nach Erreichen der zweiten Mindestsolltemperatur und einer gewissen Haltezeit wieder abgeschaltet.

Bei einer Trinkwasserentnahme aus dem Speicher während des Erwärmens auf die zweite, höhere Mindestsolltemperatur ist weiter von Vorteil, die Zusatzheizung zumindest vorübergehend abzuschalten und ein erforderliches Erwärmen des dem Speicher zugeführten Trinkwassers nur über die erste Heizeinrichtung zu veranlassen. Hierzu überprüft die Regeleinheit anhand der vom Massenstromzähler und dem Temperaturfühler übermittelten Messsignale, ob ein Abschaltkriterium vorliegt. Ein solches liegt vor, wenn innerhalb eines vordefinierten Zeitfensters die Erwärmung mit Hilfe der Zusatzheizung auf die zweite Mindestsolltemperatur nicht erreicht wird, oder wenn eine vorgegebene Aufheizrate unterschritten wird und / oder wenn die Entnahmemenge pro Zeiteinheit einen vorgegebenen Wert überschreitet. Auf diese Weise lässt sich eine besonders hohe Energieeffizienz erreichen.

Zugunsten einer besonders effektiven Legionellenschutzmaßnahme wird die Temperatur des Trinkwassers im Speicher nach Erreichen der zweiten Mindeststolltemperatur auf der zweiten Mindeststolltemperatur gehalten, bis die Soll-Entnahmemenge aus dem Speicher entnommen wurde.

Zugunsten einer möglichst hohen Energieeffizienz erfolgt durch die Regeleinheit vorzugsweise eine Ermittlung der erforderlichen Heizwärme zum Erwärmen des Trinkwassers im Speicher, insbesondere anhand des mit Hilfe des Volumen- oder Massenstromzählers ermittelten Durchsatzes an Trinkwasser und damit anhand des dem Speicher zugeführten Frischwassers sowie anhand der vom Temperaturfühler ermittelten Temperatur des Frischwassers. Basierend auf diesen Informationen wird dann zum Beispiel ermittelt, ob eine Unterstützung durch die Zusatzheizung bei der Erwärmung des Trinkwassers energetisch günstiger ist als eine Erwärmung durch die Wärmepumpe allein.

Einer weiteren vorteilhaften Ausgestaltung entsprechend umfasst die Anlage als weitere Heizeinrichtung eine Solaranlage, die mit dem Speicher verbunden ist, um solar erzeugte Wärme einzuspeisen. Vorzugsweise ist ein Zusatzspeicher angeordnet, der dem Speicher vorgeschaltet ist und der mit der Solaranlage zur Erwärmung von Trinkwasser verbunden ist. Die Solaranlage mit dem Zusatzspeicher ist nach Art eines solaren Wasserspeichers ausgebildet und dient als Vorwärmestufe für das Trinkwasser.

In zweckdienlicher Weiterbildung ist die Regeleinheit dazu eingerichtet, dass für den Fall, dass innerhalb des vorgegebenen Zeitraums die Soll-Entnahmemenge nur um eine geringe Differenzmenge unterschritten wird, die der Differenz zwischen der ermittelten Entnahmemenge und Soll-Entnahmemenge entspricht, eine Abflusseinrichtung solange geöffnet wird, bis die Soll-Entnahmemenge erreicht ist.

Dabei prüft die Regeleinheit bevorzugt zunächst, ob ein Erwärmen des Trinkwassers im Speicher auf die zweite Mindestsolltemperatur energetisch günstiger oder schlechter ist, als die Erwärmung der Differenzmenge auf die erste Mindestsolltemperatur. Danach entscheidet diese, ob die Abflusseinrichtung geöffnet oder das Trinkwasser im Speicher auf die zweite Mindestsolltemperatur erhitzt wird.

Zur Erhöhung des Komforts schaltet die Regeleinheit in bevorzugter Weiterbildung eine der Heizeinrichtungen in Abhängigkeit der vom Massenstromzähler erfassten Durchflussrate zu, regelt also die Temperatur auch unter Berücksichtigung der gemessenen Durchflussrate auf die gemischte Solltemperatur. Insbesondere erfolgt dies bei einer vom Massenstromzähler erfassten Überschreitung eines Massenstromschwellwertes, also bei einer sehr hohen Spitzendurchflussmenge, und zwar bevor eine reguläre Zuschaltung aufgrundder aktuellen Temperatur erfolgen würde. Anders als bei einer rein Temperatur-gesteuerten Regelung wird hierdurch eine kurzzeitige Absenkung der Wasseraustrittstemperatur aus dem Speicher, die nur im Minutenbereich tolerierbar ist, vermieden. Insgesamt ist hierdurch großer Zapfmenge (Durchflussrate) durch die frühzeitige Zuschaltung der Wärmepumpe ein nicht erwünschtes Absenken der Wasseraustrittstemperatur des Speichers unterhalb einer Warmwasser-Solltemperatureinstellung (50°C) verhindert. Dadurch kann der Speicher mit einem geringeren Speichervolumen ausgelegt werden, so dass die Standverluste reduziert werden. Dieses Konzept der Regelung der Heizeinrichtung in Abhängigkeit der ermittelten aktuellen Durchflussrate kann grundsätzlich auch unabhängig von den Legionellenschutzmaßnahmen eingesetzt werden und wird als eigenständig erfinderische Maßnahme angesehen.

Insgesamt wird mit dem hier beschriebenen Konzept ermöglicht, die Aufheizung des Wasserspeichers mit Hilfe einer Wärmepumpe besonders energieeffizient zu gestalten. Bei geringer Zapfmenge (Entnahmemenge) wird so spät als möglich, nämlich erst nach Ablauf des vorgegebenen Zeitraums, das Wasservolumen des Speichers auf die geforderte Warmwasser-Solltemperatur hochgeheizt. Dadurch kann sich im unteren Teil des Wasserspeichers kaltes Frischwasser sammeln. Am Beginn der Warmwasserbereitung läuft die Wärmepumpe mit niedrigeren Vorlauftemperaturen, die die Gesamteffizienz der Anlage verbessert.

Ausführungsbeispiele der Erfindung werden nachfolgend anhand einer schematischen Zeichnung näher erläutert. Darin zeigen:
- FIG 1: in einer Blockschaltbilddarstellung eine erste Ausführung einer Anlage zur Erwärmung von Trinkwasser und
- FIG 2: in einer Blockschaltbilddarstellung eine zweite Ausführung einer Anlage zur Erwärmung von Trinkwasser.

Einander entsprechende Teile sind in allen Figuren jeweils mit den gleichen Bezugszeichen versehen.

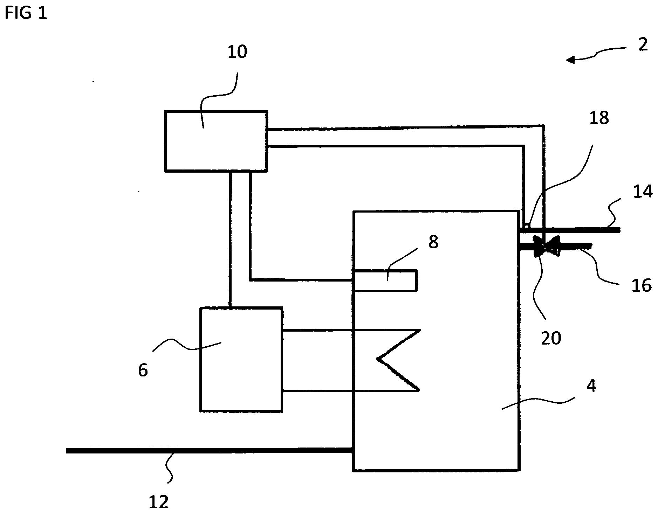

Eine erste Ausgestaltungsvariante einer Anlage 2 zur Erwärmung von Trinkwasser ist in FIG 1 nach Art eines Blockschaltbildes dargestellt. Sie umfasst einen Speicher 4 für Trinkwasser, eine Wärmepumpe 6, eine elektrische Zusatzheizung 8, insbesondere Heizstab und eine zentrale Regeleinheit 10.

Der Speicher 4, die Zusatzheizung 8 sowie die Regeleinheit 10 sind dabei beispielsweise Teil einer in einem gemeinsamen Gehäuse untergebrachten Baueinheit, welche insbesondere zur Versorgung von kleineren und mittleren Wohngebäuden vorgesehen ist. Bei größeren Einheiten können die Komponenten auch getrennt voneinander sein. Die hier beschriebene Anlage 2 ist bevorzugt für größere Warmwasser-Aufbereitungsanlagen vorgesehen, bei denen der Speicher 4 für eine Trinkwassermenge oder ein Speichervolumen von mehr als 400 I ausgelegt ist. An den Speicher 4 angeschlossen sind eine Frischwasserzuleitung 12, über welche der Frischwassernachschub gewährleistet ist, eine Warmwasserableitung 14, über die die Warmwasserentnahme für den Gebrauch, also beispielsweise für eine Dusche, erfolgt, sowie optional eine Abflussleitung 16, über welche Trinkwasser, nachfolgend kurz als Wasser bezeichnet, aus dem Speicher 4 direkt abgeleitet und beispielsweise der Abwasserentsorgung zugeführt und entsorgt werden kann.

Im Bereich des Übergangs vom Speicher 4 zur Warmwasserableitung 14 ist innerhalb der Warmwasserableitung 14 eine Sensoreinheit 18 positioniert, mit deren Hilfe eine Überwachung des Massenstroms des durch die Warmwasserableitung 14 geführten Wassers einerseits sowie eine Überwachung der Temperatur dieses Wassers andererseits vorgenommen wird. Die mittels der Sensoreinheit 18 ermittelten Daten werden an die zentrale Regeleinheit 10 übermittelt und dienen dort als Grundlage für die Regelung des Betriebes der Anlage 2 zur Erwärmung von Trinkwasser. Die Regelung erfolgt dabei unter anderem durch die Ansteuerung anstatt der Zusatzheizung 8, der Wärmepumpe 6 sowie eines Ventils 20 in der Abflussleitung 16. Hierzu ist die zentrale Regeleinheit 10 mit diesen Baugruppen signaltechnisch verbunden.

Über die Wärmepumpe 6 und die Flanschheizung 8 lässt sich jeweils nach an sich bekanntem Prinzip Wärme in das im Speicher 4 enthaltene Wasser einkoppeln, wobei die Wärmepumpe 6 als Niedertemperatur-Wärmepumpe zur Erwärmung des im Speicher 4 enthaltenen Wassers auf 50° C ausgebildet ist und wobei die Zusatzheizung nach Art eines elektrisch betriebenen Tauchsieders zur Aufheizung des im Speicher 4 enthaltenen Wassers auf mindestens 60° C ausgebildet ist.

Die Regelung des Betriebes der Anlage 2 mittels der zentralen Regeleinheit 10 erfolgt nicht nur zu Gunsten einer möglichst hohen Energieeffizienz, sondern auch derart, dass eine gesundheitsgefährdende Vermehrung von Legionellen im Speicher 4 unterbunden wird. Hierbei gilt es zu bedenken, dass sich Legionellen in Wasser insbesondere dann stark vermehren können, wenn relativ geringe Wasserbewegungen und Temperaturen zwischen 40°C - 50° C vorliegen. Dementsprechend lässt sich eine gesundheitsschädliche Vermehrung von Legionellen durch einen hohen Wasserdurchsatz durch den Speicher 4 und/oder durch eine ausreichend hohe Aufheizung des Wassers im Speicher 4 unterbinden.

Um sowohl eine gesundheitsschädliche Vermehrung von Legionellen zu vermeiden als auch den Energiebedarf der Anlage 2 möglichst niedrig zu halten, wird der Betrieb der Anlage 2 in Abhängigkeit des Warmwasserbedarfs und somit des Wasserdurchsatzes durch den Speicher 4 mittels der zentralen Regeleinheit 10 geregelt. Hierzu wird mit Hilfe der Sensoreinheit 18 der Massenstrom des Wassers in der Warmwasserableitung 14 überwacht. Solange der Massenstrom einen derartigen zeitlichen Verlauf aufweist, dass durch die Warmwasserableitung 14 innerhalb eines vorgegebenen Zeitraums, der beispielsweise mehrere Tage, insbesondere 3 Tage beträgt, ein Wasservolumen befördert wird, welches einer vorgegebenen Soll-Entnahmemenge, insbesondere dem Speichervolumen entspricht, verbleibt die Anlage 2 in einem Basisbetriebsmodus, bei welchem die Wärmepumpe 6 genutzt wird, um die Temperatur des Wassers im Speicher 4 auf etwa 50°C zu halten. Der Betrieb der Wärmepumpe 6 erfolgt dabei grundsätzlich basierend auf der Temperatur des Wassers im Speicher 4. Hierzu ist zusätzlich zur Sensoreinheit 18 zumindest ein weiterer hier nicht dargestellter Temperaturfühler angeordnet, der die Wassertemperatur etwa in einem mittleren Bereich des Speichers 4 misst.

Wird hingegen mittels der Regeleinheit 10 ein zeitlicher Verlauf des Massenstroms des Wassers durch die Warmwasserableitung 14 ermittelt, wonach das innerhalb von drei Tagen durch die Warmwasserableitung 14 beförderte Wasservolumen kleiner ist als das Wasservolumen, für welches der Speicher 4 ausgelegt ist, also das Speichervolumen, so wechselt die Anlage 2 in einen Sicherheitsmodus und es wird eine Legionellenschutzmaßnahme ergriffen.

Gemäß einer ersten Variante bedingt der Sicherheitsmodus eine Aktivierung der Zusatzheizung 8 und das Wasser im Speicher 4 wird mittels der Flanschheizung 8 auf eine zweite Mindestsolltemperatur aufgeheizt. Die zweite Mindestsolltemperatur liegt bei 60°C oder etwas darüber. Diese Temperatur wird solange gehalten, bis das Speichervolumen einmal ausgetauscht ist. Dann wechselt die Anlage 2 wieder in den Basisbetriebsmodus.

Gemäß einer zweiten Variante wird als Legionellenschutzmaßnahme eine Wassermenge über die Abflussleitung 16 abgelassen, bis die Soll-Entnahmemenge erreicht ist. Hierzu ermittelt die Regeleinheit 10 regelmäßig, ob die geforderte Soll-Entnahmemenge innerhalb des vorgegebenen Zeitraums erreicht wird. Liegt das innerhalb von drei Tagen durch die Warmwasserableitung 14 beförderte Wasservolumen nahe der Soll-Entnahmemenge und beispielsweise im Bereich von 80 - 100% der Soll-Entnahmemenge, so bedingt der Sicherheitsmodus eine Ansteuerung des Ventils 20 durch die Regeleinheit 10 derart, dass das Differenzvolumen, also die Differenz zwischen dem innerhalb von drei Tagen durch die Warmwasserableitung 14 beförderten Wasservolumens und dem Speichervolumen, über die Abflussleitung 16 entsorgt und dem Abwassersystem zugeführt wird.

Nach einem Entsorgen des Differenzvolumens über die Abflussleitung 16 oder einem Aufheizen des Wassers im Speicher 4 auf 71 °C kehrt die Anlage 2 zur Erwärmung von Trinkwasser in den Basisbetriebsmodus zurück, indem die Flanschheizung 8 deaktiviert ist und das Ventil 20 geschlossen ist.

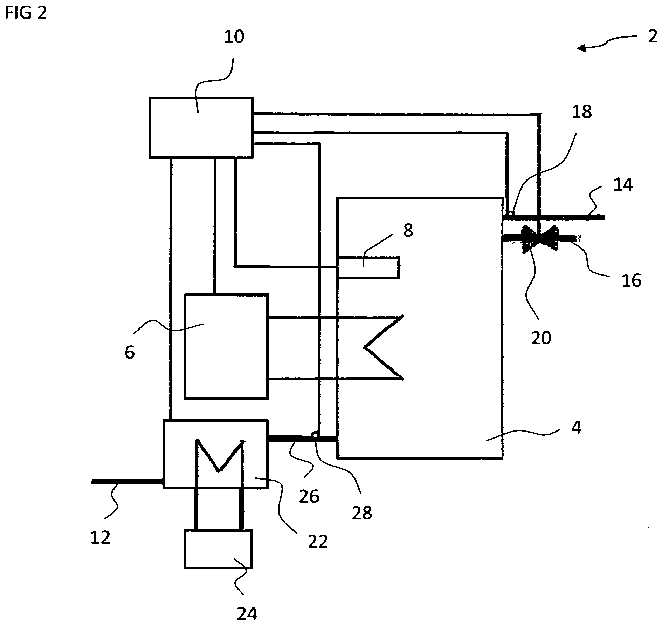

Eine zweite Ausgestaltungvariante der Anlage 2 zur Erwärmung von Trinkwasser ist nach Art eines Blockschaltbildes in FIG 2 abgebildet. Diese weist zusätzlich zur zuvor beschriebenen Ausgestaltung einen dem Speicher 4 vorgeschalteten Zusatzspeicher 22 auf, in welchen Trinkwasser über die Frischwasserzuleitung 12 eingeleitet wird. Im Zusatzspeicher 22 wird das Wasser mittels einer Solaranlage 24 vorgewärmt und anschließend über eine Verbindungsleitung 26 in den Speicher 4 übergeführt. Zusatzspeicher 22 und Solaranlage 24 dienen somit als Vorwärmstufe. Alternativ zum Zusatzspeicher 22 ist die Solaranlage 24 direkt mit dem Speicher 4 verbunden.

In die Verbindungsleitung 26 ist ein Temperatursensor 28 integriert, dessen Messdaten der zentralen Regeleinheit 10 zugeführt werden. Hierdurch stehen zusätzliche Informationen für die Regelung des Betriebs der Anlage 2 zur Erwärmung von Trinkwasser zur Verfügung.

Auch im Falle dieser Ausgestaltung der Anlage 2 sind wie im zuvor beschriebenen Ausführungsbeispiel ein Basisbetriebsmodus und ein Sicherheitsmodus vorgesehen. Im Basisbetriebsmodus werden bei dieser Ausgestaltungsvariante der Zusatzspeicher 22 und der solare Wasserspeicher 24 zumindest zur Vorwärmung des Wassers aus der Frischwasserzuleitung 12 genutzt und der Betrieb der Wärmepumpe 6 erfolgt nicht auf Basis der Messdaten der Sensoreinheit 18, sondern auch auf Basis der Messdaten des Temperatursensors 28. Die Regelung erfolgt unter Ausnutzung der zur Verfügung stehenden Messdaten, die insbesondere von der Sensoreinheit 18 sowie dem Temperatursensor 28 ggf. weiterer Temperaturensoren übermittelt werden. In Abhängigkeit dieser Eingangs-Messgrößen ermittelt die Regeleinheit 10 einen erforderlichen Wärmebedarf zur Erwärmung des Wassers im Speicher 4 auf eine gewünschte Soll-Temperatur. Insbesondere bei der Entscheidung, welche Legionellenschutzmaßnahme ergriffen werden soll, ob also ein Aufheizen des Wassers im Speicher 4 oder ein Ablassen der Differenzmenge erfolgen soll, ermittelt die Regeleinheit 10 den Wärmebedarf für diese beiden unterschiedlichen Szenarien und entscheidet in Abhängigkeit des ermittelten Wärmebedarfs und/oder der für den Verbraucher dabei entstehenden Energiekosten, welche dieser beiden Legionellenschutzmaßnahmen ergriffen wird. Diese Ermittlung und Entscheidungsfindung ist grundsätzlich auch bei der Ausführungsvariante gemäß der FIG 1 vorgesehen. Hier kann ein zusätzlicher Temperatursensor in der Frischwasserleitung 12 angeordnet oder mit einer konstanten Frischwasser-Temperatur gerechnet werden.

Darüber hinaus entscheidet die Regeleinheit 10 anhand der erhaltenen Messdaten auch darüber, welche der Heizeinrichtungen 6, 8 für das Aufwärmen zugeschaltet bzw. abgeschaltet wird. So überprüft die Regeleinheit 10 während des Aufheizens, ob der zu erwartende Temperaturanstieg tatsächlich eintritt und/oder ob während des Aufheizens eine große Wassermenge entnommen wird. Je nach aktuellem Zustand und aktueller Durchflussrate kann beispielsweise die Legionellenschutzmaßnahme abgebrochen werden, da ein ausreichender Wasserdurchsatz aktuell vorliegt. Alternativ wird zumindest zwischenzeitig aus Energie-Effizienzgründen die Zusatzheizung 8 abgeschaltet und das Wasser zunächst ausschließlich wieder mit der Wärmepumpe 6 auf die erste Soll-Temperatur aufgeheizt. Dadurch wird vermieden, dass in ineffizienter Weise über die Zusatzheizung bei einer aktuell großen Durchflussrate das zugeführte Frischwasser ausschließlich über die elektrische Zusatzheizung 8 erwärmt wird.

Im Hinblick auf einen energieeffizienten Betrieb wird die Zuschaltung der Wärmepumpe 6 darüber hinaus insbesondere auch in Abhängigkeit der von der Sensoreinheit 18 ermittelten aktuellen Durchflussrate, ggf. in Verbindung mit der aktuellen Temperatur des Wassers im Speicher 4, gesteuert. Überschreitet die Durchflussrate einen vorgegebenen, ggf. von der Temperatur des Wassers abhängigen Grenzwert, so wird die Wärmepumpe 6 frühzeitig zugeschaltet, noch bevor ein sonst üblicher Schalt-Temperaturwert der Wassertemperatur im Speicher unterschritten wird. Durch diese Maßnahme erfolgt eine vorzeitige Zuschaltung der Wärmepumpe 6, wodurch die Temperatur des Wassers im Speicher 4 besser auf der gewünschten Soll-Temperatur gehalten wird. Dadurch besteht die Möglichkeit, das Speichervolumen insgesamt geringer auszulegen. Dadurch verbessert sich weiter die Energieeffizienz, da aufgrund des geringeren Speichervolumens Standverluste reduziert sind.

### Bezugszeichenliste

- 2: Anlage
- 4: Speicher
- 6: Wärmepumpe
- 8: Flanschheizung
- 10: zentrale Regeleinheit
- 12: Frischwasserzuleitung
- 14: Warmwasserableitung
- 16: Abflussleitung
- 18: Sensoreinheit
- 20: Ventil
- 22: Zusatzspeicher
- 24: Solaranlage
- 26: Verbindungsleitung
- 28: Temperatursensor

## Patentansprüche

1. Anlage (2) zur Erwärmung von Trinkwasser umfassend einen Speicher (4) für das Trinkwasser mit einem vorgegebenen Speichervolumen und umfassend eine erste Heizeinrichtung (6) zum Erwärmen des Trinkwassers im Speicher (4) auf eine erste Mindestsolltemperatur **dadurch gekennzeichnet, dass** eine Regeleinheit (10) vorgesehen ist, die überprüft, ob eine Soll-Entnahmemenge an Trinkwasser aus dem Speicher (4) innerhalb eines vorgegebenen Zeitraums entnommen wurde, und in Abhängigkeit einer ermittelten Entnahmemenge an Trinkwasser entscheidet, ob eine Legionellenschutzmaßnahme notwendig ist.

2. Anlage (2) nach Anspruch 1,
die im Falle der Notwendigkeit für eine Legionellenschutzmaßnahme derart über die Regeleinheit (10) automatisch gesteuert wird, dass das Trinkwasser im Speicher (4) auf eine zweite Mindestsolltemperatur erwärmt wird, die über der ersten Mindestsolltemperatur liegt.

3. Anlage (2) nach Anspruch 2,
wobei zur Erwärmung des Trinkwassers auf die zweite, höhere Mindestsolltemperatur eine zweite Heizeinrichtung (8) angeordnet ist, insbesondere eine elektrische Zusatzheizung (8).

4. Anlage (2) nach einem der vorhergehenden Ansprüche,
wobei die erste Heizeinrichtung eine Wärmepumpe (6) ist, die lediglich für die Erwärmung des Trinkwassers auf die erste Mindestsolltemperatur ausgebildet ist.

5. Anlage (2) nach einem der vorhergehenden Ansprüche,
wobei zur Ermittlung der Entnahmemenge an Trinkwasser pro Zeiteinheit ein Massenstromzähler (18) vorgesehen ist.

6. Anlage (2) nach einem der vorhergehenden Ansprüche,
wobei ein Temperaturfühler (18) zur Messung der Temperatur des erwärmten Trinkwassers am Austritt (14) des Speichers (4) angeordnet ist.

7. Anlage (2) nach einem der vorhergehenden Ansprüche und nach Anspruch 3,
wobei die Regeleinheit (10) derart ausgebildet ist, dass im Falle einer Trinkwasserentnahme aus dem Speicher (4) während des Erwärmens auf die zweite, höhere Mindestsolltemperatur die zweite Heizeinrichtung (8) bei Vorliegen eines Abschaltkriteriums zumindest vorübergehend abgeschaltet wird und ein erforderliches Erwärmen des dem Speicher (4) zugeführten Trinkwassers über die erste Heizeinrichtung (6) erfolgt.

8. Anlage (2) nach einem der vorhergehenden Ansprüche und nach Anspruch 2,
wobei die Regeleinheit (10) derart ausgebildet ist, dass die Temperatur des Trinkwassers im Speicher (4) auf der zweiten Mindestsolltemperatur gehalten wird, bis die Soll-Entnahmemenge an Trinkwasser aus dem Speicher (4) entnommen wurde.

9. Anlage (2) nach einem der vorhergehenden Ansprüche und nach Anspruch 2,
wobei die Regeleinheit (10) zur Ermittlung der erforderlichen Heizwärme zum Erwärmen des Trinkwassers ausgebildet ist und in Abhängigkeit hiervon und/oder der aktuellen Temperatur des Trinkwassers entscheidet, welche Heizeinrichtung (6, 8, 24) zur Erwärmung herangezogen wird.

10. Anlage (2) nach einem der vorhergehenden Ansprüche,
wobei der Speicher (4) mit einer Solaranlage (24) als weitere Heizeinrichtung zur Erwärmung des Trinkwassers verbunden ist.

11. Anlage (2) nach einem der vorhergehenden Ansprüche,
wobei die Regeleinheit (10) zur Abschätzung ausgebildet ist, ob innerhalb des vorgegebenen Zeitraums die Soll-Entnahmemenge an Trinkwasser aus dem Speicher (4) unterschritten werden wird, und gegebenenfalls in Abhängigkeit der Differenzmenge zwischen ermittelter Entnahmemenge und Soll-Entnahmemenge eine Abflusseinrichtung (16,20) solange öffnet, bis die Soll-Entnahmemenge erreicht ist.

12. Anlage (2) nach Anspruch 11,
wobei die Regeleinheit (10) zur Überprüfung eingerichtet ist, ob ein Erwärmen des Trinkwassers im Speicher (4) auf die zweite Mindestsolltemperatur energetisch günstiger oder schlechter ist als die Erwärmung der Differenzmenge auf die erste Mindestsolltemperatur und danach entscheidet, ob die Abflusseinrichtung (16,20) geöffnet oder das Trinkwasser im Speicher (4) auf die zweite Mindestsolltemperatur erhitzt wird.

13. Anlage (2) nach einem der vorhergehenden Ansprüche,
wobei die Regeleinheit (10) derart ausgebildet ist, dass die Heizeinrichtung (6) bereits bei einer vom Massenstromzähler (18) erfassten Überschreitung eines Massenstromschwellwertes zugeschaltet wird.

14. Verfahren zur Erwärmung von Trinkwasser in einem Speicher (4) mit einem vorgegebenen Speichervolumen, bei dem das Trinkwasser auf eine erste Mindestsolltemperatur erwärmt und auf dieser Temperatur gehalten wird **dadurch gekennzeichnet, dass** überprüft wird, ob eine Soll-Entnahmemenge an Trinkwasser aus dem Speicher (4) innerhalb eines vorgegebenen Zeitraums entnommen wurde, und in Abhängigkeit einer ermittelten Entnahmemenge entschieden wird, ob eine Legionellen-Schutzmaßnahme ergriffen wird.

## Claims

1. System (2) for warming drinking water, comprising a storage unit (4) for the drinking water with a predefined storage capacity, and comprising a first heating device (6) for warming the drinking water in the storage unit (4) to a first minimum target temperature, **characterized in that** a control unit (10) is provided which checks whether a desired withdrawal quantity of drinking water has been withdrawn from the storage unit (4) within a predefined period of time and, on the basis of a determined withdrawal quantity of drinking water, decides whether a measure protecting against Legionella is required.

2. System (2) according to Claim 1, which system (2), in the event of a measure protecting against Legionella being required, is automatically controlled via the control unit (10) in such a way that the drinking water in the storage unit (4) is warmed to a second minimum target temperature, which is higher than the first minimum target temperature.

3. System (2) according to Claim 2, wherein a second heating device (8), in particular an electrical auxiliary heater (8), is arranged to warm the drinking water to the second, higher minimum target temperature.

4. System (2) according to one of the preceding claims, wherein the first heating device is a heat pump (6) which is configured only to warm the drinking water to the first minimum target temperature.

5. System (2) according to one of the preceding claims, wherein a mass flow meter (18) is provided in order to determine the quantity of drinking water withdrawn per unit of time.

6. System (2) according to one of the preceding claims, wherein a temperature sensor (18) is arranged to measure the temperature of the warmed drinking water at the outlet (14) of the storage unit (4) .

7. System (2) according to one of the preceding claims and according to Claim 3, wherein the control unit (10) is configured in such a way that, in the event of drinking water being withdrawn from the storage unit (4) during the warming to the second, higher minimum target temperature, the second heating device (8) is at least temporarily switched off in the presence of a switch-off criterion, and a required warming of the drinking water supplied to the storage unit (4) is effected via the first heating device (6).

8. System (2) according to one of the preceding claims and according to Claim 2, wherein the control unit (10) is configured in such a way that the temperature of the drinking water in the storage unit (4) is held at the second minimum target temperature until the desired withdrawal quantity of drinking water has been withdrawn from the storage unit (4).

9. System (2) according to one of the preceding claims and according to Claim 2, wherein the control unit (10) is configured to determine the required heating energy for warming the drinking water and, on the basis thereof and/or on the basis of the current temperature of the drinking water, decides which heating device (6, 8, 24) is used for the warming.

10. System (2) according to one of the preceding claims, wherein the storage unit (4) is connected to a solar installation (24) as further heating device for warming the drinking water.

11. System (2) according to one of the preceding claims, wherein the control unit (10) is configured to assess whether, within the predefined period of time, the desired withdrawal quantity of drinking water from the storage unit (4) will be undershot and, if necessary, on the basis of the difference quantity between the determined withdrawal quantity and the desired withdrawal quantity, opens an outflow device (16, 20) until the desired withdrawal quantity is reached.

12. System (2) according to Claim 11, wherein the control unit (10) is configured to check whether a warming of the drinking water in the storage unit (4) to the second minimum target temperature is more favourable or less favourable in energy terms than the warming of the difference quantity to the first minimum target temperature and thereafter decides whether the outflow device (16, 20) is opened or the drinking water in the storage unit (4) is heated to the second minimum target temperature.

13. System (2) according to one of the preceding claims, wherein the control unit (10) is configured in such a way that the heating device (6) is already switched on when the mass flow meter (18) detects that a mass flow threshold value is exceeded.

14. Method for warming drinking water in a storage unit (4) with a predefined storage capacity, in which method the drinking water is warmed to a first minimum target temperature and is held at this temperature, **characterized in that** a check is made as to whether a desired withdrawal quantity of drinking water has been withdrawn from the storage unit (4) within a predefined period of time and, on the basis of a determined withdrawal quantity, a decision is made as to whether a measure protecting against Legionella is taken.

## Revendications

1. Installation (2) pour le chauffage d'eau potable comprenant un réservoir (4) pour l'eau potable avec une capacité de stockage prédéterminée et comprenant un premier dispositif de chauffage (6) pour chauffer l'eau potable dans le réservoir (4) à une première température de consigne minimale, **caractérisée en ce qu'**il est prévu une unité de régulation (10), qui vérifie si une quantité de prélèvement de consigne d'eau potable a été prélevée du réservoir (4) à l'intérieur d'un intervalle de temps prédéterminé, et décide, en fonction d'une quantité de prélèvement détectée, si une mesure de protection contre la légionellose est nécessaire.

2. Installation (2) selon la revendication 1 qui, en cas de nécessité d'une mesure de protection contre la légionellose, est conduite automatiquement par l'unité de régulation (10), de telle manière que l'eau potable dans le réservoir (4) soit chauffée à une deuxième température de consigne minimale, qui se situe au-dessus de la première température de consigne minimale.

3. Installation (2) selon la revendication 2, dans laquelle, pour le chauffage de l'eau chaude à la deuxième température de consigne minimale plus élevée, un deuxième dispositif de chauffage (8) est disposé, en particulier un chauffage électrique supplémentaire (8).

4. Installation (2) selon l'une quelconque des revendications précédentes, dans laquelle le premier dispositif de chauffage est une pompe à chaleur (6), qui est configurée uniquement pour le chauffage de l'eau potable à la première température de consigne minimale.

5. Installation (2) selon l'une quelconque des revendications précédentes, dans laquelle il est prévu un compteur de débit massique (18) pour la détermination de la quantité de prélèvement d'eau potable par unité de temps.

6. Installation (2) selon l'une quelconque des revendications précédentes, dans laquelle un capteur de température (18) pour mesurer la température de l'eau potable chauffée est disposé à la sortie (14) du réservoir (4).

7. Installation (2) selon l'une quelconque des revendications précédentes et selon la revendication 3, dans laquelle l'unité de régulation (10) est configurée de telle manière que, en cas de prélèvement d'eau potable hors du réservoir (4) pendant le chauffage à la deuxième température de consigne minimale plus élevée, le deuxième dispositif de chauffage (8) soit au moins provisoirement coupé en présence d'un critère de coupure et qu'un chauffage nécessaire de l'eau potable fournie au réservoir (4) soit effectué au moyen du premier dispositif de chauffage (6).

8. Installation (2) selon l'une quelconque des revendications précédentes et selon la revendication 2, dans laquelle l'unité de régulation (10) est configurée de telle manière que la température de l'eau potable dans le réservoir (4) soit maintenue à la deuxième température de consigne minimale, jusqu'à ce que la quantité de prélèvement de consigne d'eau potable hors du réservoir (4) ait été prélevée.

9. Installation (2) selon l'une quelconque des revendications précédentes et selon la revendication 2, dans laquelle l'unité de régulation (10) est configurée de façon à déterminer la chaleur de chauffage nécessaire pour chauffer l'eau potable et en fonction de celle-ci et/ou de la température actuelle de l'eau potable, décide quel dispositif de chauffage (6, 8, 24) est utilisé pour le chauffage.

10. Installation (2) selon l'une quelconque des revendications précédentes, dans laquelle le réservoir (4) est relié à une installation solaire (24) en tant qu'autre dispositif de chauffage pour le chauffage de l'eau potable.

11. Installation (2) selon l'une quelconque des revendications précédentes, dans laquelle l'unité de régulation (10) est configurée pour évaluer si la quantité de prélèvement de consigne d'eau potable hors du réservoir (4) ne sera pas atteinte à l'intérieur de l'intervalle de temps prédéterminé et éventuellement, en fonction de la quantité différentielle entre la quantité de prélèvement détectée et la quantité de prélèvement de consigne, ouvre un système d'évacuation (16, 20) jusqu'à ce que la quantité de prélèvement de consigne soit atteinte.

12. Installation (2) selon la revendication 11, dans laquelle l'unité de régulation (10) est conçue pour vérifier si un chauffage de l'eau potable dans le réservoir (4) à la deuxième température de consigne minimale est au point de vue énergétique plus favorable ou pire que le chauffage de la quantité différentielle à la première température de consigne minimale et décide ensuite si on ouvre le système d'évacuation (16, 20) ou si on chauffe l'eau potable dans le réservoir (4) à la deuxième température de consigne minimale.

13. Installation (2) selon l'une quelconque des revendications précédentes, dans laquelle l'unité de régulation (10) est configurée de telle manière que le dispositif de chauffage (6) soit déjà enclenché lors d'un dépassement d'une valeur de seuil de débit massique détecté par le compteur de débit massique (18) .

14. Procédé pour le chauffage d'eau potable dans un réservoir (4) avec une capacité de stockage prédéterminée, dans lequel on chauffe l'eau potable à une première température de consigne minimale et on la maintient à cette température, **caractérisé en ce que** l'on vérifie si une quantité de prélèvement de consigne d'eau potable a été prélevée hors du réservoir (4) pendant un intervalle de temps prédéterminé et on décide, en fonction d'une quantité de prélèvement détectée, si on prend une mesure de protection contre la légionellose.
